# EUROPEAN PATENT APPLICATION

(11) **EP 2 803 651 A1**
(43) Date of publication of application: **19.11.2014**
(21) Application number: 14167561.1
(22) Date of filing: 08.05.2014
(51) Int. Cl.: C04B 7/47, F27B 7/38

(54) **Process for cooling white clinker and relative apparatus**

(30) Priority: 13.05.2013 IT IT20130786
(71) Applicant: ITALCEMENTI S.p.A., 24121 Bergamo (IT)
(72) Inventor: Cinti, Giovanni, 24121 Bergamo (IT)
(74) Representative: De Gregori, Antonella

(57) **Abstract**

A process for cooling white clinker is described comprising the following phases:
a) a phase of size reduction of the clinker leaving the rotary kiln in the aggregate form and sending of the clinker thus grinded to the next phase of cooling, in a time of about 1 second;
b) a phase of cooling at temperatures lower than 400-500°C of the clinker coming from phase a), by spraying of an amount of stoichiometric water, in an environment substantially free of oxygen, and with simultaneous mixing of the clinker;
c) a phase of cooling of the clinker coming from phase b) at a temperature of about 100°C, by means of blown air;
d) a phase of recovery of the hot air thus produced.

## Description

The present invention relates to a process for cooling white clinker and related apparatus.

In particular, such an apparatus is arranged for cooling white clinker, but it can be reversibly convertible, in a quick and simple way to the cooling of grey clinker, and vice-versa, and consequently to the production of the same.

The technology for production of white clinker is substantially based on the selection of appropriate raw materials, which must be suitable for the production of Portland cement and at the same time they must be poor of chromophore elements, in particular poor of iron, chrome and manganese.

Consequently, clays will not be used as raw materials, known to be rich in iron, and also limestone shall be selected among limestone having a contents of iron such as to be only an impurity.

Despite these expedients, the residual contents of iron however present in the raw materials, the metallic iron and chrome coming from materials through which the various elements of the plant are necessarily achieved, such as for example the grinding bodies of the grinding mill of the raw mixture and the firebricks of which the kiln is covered in its whole, imply anyhow a quantity of chromophore elements sufficient to worsen the quality of white clinker to be produced.

Due to this reason, during the process of production of white clinker, the phase of cooling cannot be analogous to that normally used in the phase of cooling of grey clinker. Grey clinker is indeed subjected to a phase of cooling which implies the achievement of an intimate contact, at the exit of the rotary kiln tube, between clinker at 1400°C and air at room temperature. Said phase of cooling cannot be applied to the production process of white clinker, as at such temperatures and concentrations of oxygen the chromophore metals, however present owing to the reasons previously identified, would oxidize, taking the typical colours of the related oxides, colouring thus the white clinker and consequently worsening the quality of the end-product.

Not being possible, as said, to eliminate in full the chromophore elements, the most modern processes focus right in the direction to prevent as much as possible oxidation of the chromophore elements, which are coloured only under the oxidised state.

Such a requirement shall however consider the need to cool the clinker quickly, said need being present both for white clinker, and for grey clinker. The quick cooling is crucial for preventing a worsening of the quality of clinker and, in particular, for preventing retrogradation of C3S (Ca₃SiO₅) to C2S (Ca₂SiO₄), that is, the conversion of tricalcium silicate into dicalcium silicate. Indeed, tricalcium silicate is the most refined component of the clinker from cement, as it is capable to develop high resistances in a short time.

Due to thermodynamic reasons, C3S is unstable and tends to decompose below 1200°C. If however the clinker is cooled quickly, the reaction of disassociation of tricalcium silicate into dicalcium silicate and calcium oxide is kinetically hindered. In other words, tricalcium silicate, although unstable below 1200°C, is frozen at lower temperatures and the dissociation reaction is increasingly difficult when temperature diminishes. At last, at room temperature, the reaction is in fact hindered.

As above outlined, in the case of white clinker it is not possible to carry out the phase of cooling with air; in the known processes of the state of the art the quick cooling phase uses water. According to a first solution, the clinker at the exit of the kiln is directly immersed into water, with consequent abrupt cooling at temperatures which are well lower than the temperatures at which both oxidation of the metallic elements and retrogradation of C3S may occur.

A process of cooling of white clinker according to this method, against a full preservation of whiteness of the clinker so produced with respect to the quality of the raw materials used, implies however at the same time the necessity to immediately dry the wet clinker thus obtained and the total loss of heat associated with clinker, said heat being totally dissipated by evaporation of water with which the clinker is put into contact. That heat, on the contrary, is at least partially recovered in the process for the production of grey clinker in the form of pre-heated secondary/tertiary air.

Alternatively to immersion into water of the red-hot clinker, the quench into water can be achieved also with a more restricted quantity of water, however sufficient to cool the clinker up to temperatures lower than 300-400°C, temperatures at which the oxidation of chromophore metals can no more occur spontaneously. This type of quench is called "with a quantity of stoichiometric water" and presents the advantage to produce dry clinker which does not require further treatments of drying.

Consequently, considering the aforesaid with reference to the processes according to the prior art, the production of white clinker is intrinsically more energy-consuming than that of grey clinker.

Moreover, the plants or apparatuses destined to the two productions differ from each other in a substantial manner: the former, destined to the production of white clinker, are provided, at the exit of the kiln:
- with a container full of water, called quenching tank, in which the red-hot clinker leaving the rotary kiln at 1400°C falls, and from which the clinker is then pulled out cool, at least on the surface of the clinker granules, and wet. Indeed, it is necessary to subject the clinker thus produced to an immediate process of drying which eliminates the residual surface water, avoiding so the hydration of the clinker itself, or alternatively
- with a rotary drum, inside which is sprayed the water necessary to cool the clinker up to temperatures lower than 300-400°C, with the expedient that, inside the drum, air cannot enter from the outside and at the same time the vapour produced cannot enter the kiln, affecting its productivity.

The plants devoted to the production of grey clinker provide instead that, at the exit of the kiln rotary tube, the red-hot clinker is poured in a metallic cooler consisting of a plurality of semi-fixed perforated plates, under which cool air taken from the environment is blown; such an air, put into direct contact with the clinker, takes away the sensitive heat, cooling it, and it heats at temperatures higher than 800°C. It is then reused in the kiln as secondary and/or tertiary combustion air.

It is therefore apparent that a plant destined to the production of white clinker, according to the processes of the state of the art, cannot produce also grey clinker, and vice-versa, as a key part of the technological cycle, precisely the part relating to the phase of cooling of the clinker, is substantially different, having to accomplish two different functions: quick tempering in the absence of oxygen when it is desired to produce white clinker, quick cooling with air when it is instead desired to produce grey clinker, recovering the sensitive heat of the grey clinker.

In the case of grey clinker, indeed, the colour is not a relevant parameter and therefore there is no interest to use a process which gives improved results right with reference to said feature.

La quenching tank or the rotary drum, which replaces the plate cooler typically used for cooling the grey clinker, makes thus the plant for the production of white clinker not suitable for the production of grey clinker.

There are cases in which the production of white clinker, which is a semi-product presenting an added value considerably higher than the grey clinker, can be interesting for the availability of raw materials suitable for this purpose but difficult to achieve with a dedicated autonomous plant, as the market, normally limited in the quantities, would not be capable to support a production unit entirely dedicated to this type of clinker.

It arises therefore the interest to achieve productive plants/apparatuses which can be simultaneously suitable both for the production of white clinker and for the production of grey clinker, solving therefore the technical problem previously highlighted.

The present invention relates thus to a process and an apparatus which overcome the drawbacks of the processes and apparatuses according to the state of the art and, more specifically, a process of cooling or tempering the white clinker and an apparatus which can be destined to the cooling and thus to the production both of white clinker and of grey clinker, being convertible in a simple, quick and reversible manner from a production to the other.

Object of the present invention is a process for the cooling of white clinker comprising the following phases:
a) a phase of size reduction of the clinker leaving the rotary kiln in the aggregate form and sending the clinker thus grinded to the next phase of cooling in a time of about 1 second;
b) a phase of cooling at temperatures lower than 400-500°C of the clinker coming from phase a), by spraying of a "stoichiometric" quantity of water, in an environment free of oxygen, and simultaneous mixing of the clinker;
c) a phase of cooling of the clinker coming from phase b) at a temperature of about 100°C, by blown air;
d) a phase of recovery of the hot air thus produced. Phase b) is carried out in an environment saturated with aqueous vapour which maintains the environment free of outside air.

The hot air recovered from phase d) is reused partly or completely in the form of secondary combustion air.

A further object of the present invention is an apparatus for the cooling of white clinker comprising, at the exit of the kiln rotary tube, a plate cooler provided with a roll mill and of a first screw conveyer with a rotation axis perpendicular with respect to the rotation axis of the kiln rotary tube, said mill and first conveyor being removable from the cooler through an extraction system; said first screw conveyor being connected to a second screw conveyor /mixer, suited for cooling the clinker with water and to mix the same, and in its turn connected to a third metallic conveyor, suited to feed the clinker inside the plate cooler.

The plate cooler comprises the roll mill, cooled with water, which is positioned in the space immediately downstream of the exit of the kiln rotary tube and upstream of the hollowed plates.

The roll mill provides the size reduction of the clinker leaving the rotary kiln in the aggregate form with sizes greater than 20-30 mm.

The screw conveyer with a rotation axis perpendicular with respect to the rotation axis of the kiln rotary tube, also called first screw of fast conveying, has the task to quickly extract the clinker by-now crushed from the casing of the cooler. Said first convey screw, also cooled with water, shall rotate sufficiently quick to allow the clinker to remain inside the cooler, after the above said grinding, for times of the order of one second.

The extraction system from the cooler of the roll mill and of the first screw conveyor may preferably consist of suitable tracks on which said elements can slide.

Through such an expedient these two elements, roll mill and screw conveyor, are achieved in a way to be easily and quickly removed from the cooler itself.

The apparatus according to the present invention provides then a second screw conveyor/mixer which can be coaxial with the first screw conveyor, when the two conveyors work on the same level, or it can be connected to the first screw conveyor by fall through a vertical duct, when the two conveyors are working on different levels.

Also such a second screw conveyor, called second convey screw, is cooled with water. It is enclosed in a casing which isolates it from the outside.

In such a second screw conveyor a quantity of "stoichiometric" water is sprayed, in such a way to cool the clinker at temperatures lower than 400-500°C, in an environment free of oxygen, as it is saturated with water vapour.

The second screw conveyor provides to convey the clinker towards the unload from the same, operating at the same time its mixing in such a way to make as much as possible efficient the cooling of the clinker. The water vapour, produced during this phase, has the task to maintain the inner environment of the second screw conveyor/mixer free of outside air; the vapour is removed then from the second screw conveyor/mixer through a proper duct and it is sent to a dedusting filter and successively, through a proper exhauster, to the chimney.

The apparatus according to the present invention provides then a third metallic conveyor connected to the output of the second screw conveyor, which newly feeds the clinker, cooled at a temperature of 400-500°C, inside the plate cooler.

Said third metallic conveyor can be a screw conveyor. In the plate cooler, conventionally, the clinker is cooled by air blown through the hollowed plates of which its surface is composed, up to temperatures suitable for storage (about 100°C).

The hot air so produced, even if at temperatures considerably lower than those typical of a kiln for the production of grey clinker, is, at least in part, reused as secondary combustion air.

The apparatus subject-matter of the present invention is partly inside (mill and first screw conveyor) the plate cooler and partly outside (second screw conveyor and third metallic conveyor).

As said, the mill and the first screw conveyor can be easily removed from the cooler itself through proper tracks on which they can slide. After the extraction of these two components, the kiln can normally get back to produce grey clinker, while through their reintroduction it is possible to quickly get back to produce white clinker.

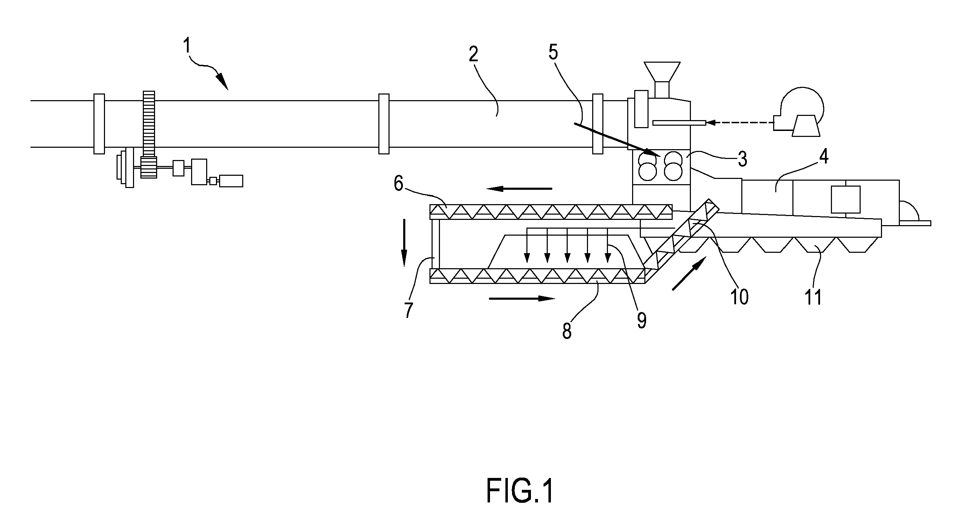

Into figure 1 is schematically reported the apparatus according to the present invention, as well as the previously described process of cooling or stoichiometric tempering of white clinker with the chance of quick reconversion to the production of grey clinker.

Figure 1 is a schematic illustration of the process and apparatus according to the present invention.

With reference to Figure 1, at the exit of the rotary tube 2 of the kiln 1, the clinker leaving the rotary kiln in the aggregate form is fed to a roll mill 3, arranged in the plate cooler 4, in the portion 5 of said cooler 4, immediately downstream of the exit of the rotary tube 2 of the kiln 1.

The clinker, crushed in the roll mill 3 up to a size smaller than 20-30 mm, reaches the first screw conveyor 6, with a rotation axis perpendicular with respect to the rotation axis of the rotary tube 2 of the kiln 1. The clinker by-now crushed is thus quickly removed from the casing of the cooler 4. In the case illustrated in figure 1, the clinker is fed by fall through a vertical duct 7 to a second screw conveyor/mixer 8. In such a second conveyor 8 the clinker is subjected to a cooling phase up to temperatures lower than 400-500°C, by spraying of a "stoichiometric" quantity of water, in an environment free of oxygen, and simultaneous mixing of the clinker. The spraying is carried out through suitable elements 9 which spray water fed in 10 on clinker. The clinker thus cooled and mixed is fed to a third screw conveyor 11 (the third conveyor is a screw conveyor in this embodiment, but, as previously indicated, it can be a whichever metallic conveyor) feeding it again to the plate cooler 4. In the plate cooler 4, the clinker is cooled at a temperature of about 100°C, by blown air.

The second screw conveyor/mixer 8 is connected, through an appropriate duct, to a dedusting filter and successively, through an exhauster, to a chimney (not shown in figure), through which the vapour produced in phase b) is extracted and removed.

A first advantage of the process and of the apparatus subject-matter of the present invention is linked to an innovative element consisting in the presence and in the use of a screw conveyor cooled with water to extract very quickly clinker at a very high temperature from the cooler; this allows to carry out the subsequent phases of the white clinker cooling process without interfering with the functioning and the structure of the plate cooler, mostly in terms of mechanical modifications. Such modifications would be irreversible and would then prevent the use of the apparatus also for the treatment of grey clinker. The plate cooler remains therefore part of the apparatus for the cooling of white clinker without that this creates any problem and, even, it actively participates to the next phase of final cooling of the clinker from 400-500°C,the temperature at which it is released from the second screw conveyor and conveyed to the cooler by the third conveyor, up to the temperature of about 100°C, namely at the temperature of normal release of the clinker from the cooler itself.

A further advantage of the process and of the apparatus of the present invention is linked to the innovative element consisting in the presence and in the use of a second screw conveyor/mixer, cooled with water, to achieve the spray cooling or tempering with "stoichiometric" water, in an environment of restricted volume, where the water vapour developed by contact between red-hot clinker and liquid water reduces or even eliminates the oxygen from the environment in which the cooling process occurs, with consequent preservation of the metals in the non-oxidized state and thus not colouring.

The structure of the screw itself is such as to allow control of the advancing speed of the material and of the mixing of the same; also the spraying of water can be controlled both in terms of quantity of sprayed air and in terms of intensity (delivery pressure). The use of a screw conveyor, that is a screw system, moreover allows to achieve in a single machine the conveying of the clinker and its mixing so as to favour its cooling in a homogeneous way by water spraying. Conveys of different type, such as metallic cup or chain ribbons, would not have allowed the mixing of the conveyed clinker, with a consequent not homogeneous cooling and with a partial formation of chromophore oxides in the clinker thus produced.

Thus, the process and the apparatus according to the present invention starting from suitable raw materials, allow to achieve the production of white clinker of excellent quality as they allow to prevent as far as possible the contact with clinker leaving the kiln at 1400 °C with the oxygen of the atmospheric air. They are however reversibly convertible, in a quick and simple way, to the production of grey clinker.

Other features and advantages of the invention will result apparent from the following example reported with an illustrative and non-limitative purpose.

### Example 1

It has been achieved a prototype of the apparatus according to the present invention which has been used for a campaign of production of white clinker which went on for about six months.

The operating parameters of the apparatus have settled on the following values:
Production: 300 tons a day of white clinker
Grade of brightness: 84-87;
Temperature of the clinker at the exit of the third conveyor: about 500°C;
Quantity of water sprayed in the second conveyor: < 0,5 l/kg of clinker.

The kiln, at the end of the campaign of production of white clinker, which went on for about six months, has been converted from the production of sulfoalluminate clinker, and successively, after a campaign of about three months, has been newly converted for the production of white clinker.

The time necessary for modifying the cooling system through extraction/reinsertion of the roll mill and of the screw conveyor from/in the plate cooler has been of about one week.

The quality of the clinker produced resulted in both cases fully in line with that of other processes not characterized by the possibility to economically alternate the production of different types of clinker.

## Claims

1. Process for cooling white clinker comprising the following steps:
a) a step of reducing the size of the clinker leaving the rotary kiln in aggregate form and of sending the so crushed clinker to the subsequent cooling step, in a time of about 1 s;
b) a step of cooling the clinker coming from step a) to temperatures below 400-500°C, by spraying a stoichiometric amount of water, in an environment substantially free of oxygen, and with simultaneous mixing of the clinker;
c) a second step of cooling the clinker coming from step b) to a temperature of about 100°C by means of blown air;
d) step of recovery of the thus produced hot air.

2. Process according to claim 1, wherein step b) is carried out in an environment saturated with water vapour, keeping the environment free from external air.

3. The process according to any one of the preceding claims, in which the hot air recovered from step d) is partly or totally reused as secondary air of combustion.

4. Apparatus for cooling white clinker, which comprises, in output from the rotary kiln tube, a plate cooler provided with a roll mill and a first screw conveyor, said conveyor having an axis of rotation perpendicular to the axis of rotation of the rotary kiln tube, said mill and first conveyor being extractable from the cooler through an extraction system; said first screw conveyor being connected to a second screw conveyor/mixer, adapted to cool the clinker with water and to mix the same, in turn connected to a third metallic conveyor, adapted to feed the clinker inside the plate cooler.

5. Apparatus according to claim 4, wherein the roll mill is water-cooled and is positioned in the space of the plate cooler immediately downstream of the outlet of the rotary kiln tube and upstream of the perforated plates.

6. Apparatus according to any one of the preceding claims 4 or 5, wherein the first screw conveyor is water-cooled and rotates at a speed such that the clinker leaves the cooler, after crushing, in times of the order of one second.

7. Apparatus according to any one of the preceding claims 4-6, wherein the extraction system of the roll mill and of the first screw conveyor from the cooler is formed by suitable tracks on which said elements slide.

8. Apparatus according to any one of the preceding claims 4-7, wherein the second screw conveyor is coaxial with the first screw conveyor, when the two conveyors are working on the same plane, or it is connected with the first screw conveyor by fall through a vertical duct, when the two conveyors are working on different levels.

9. Apparatus according to any one of the preceding claims 4-8, wherein the second screw conveyor/mixer is water-cooled and enclosed in a casing which isolates it from the outside, said conveyor comprising at least one element that sprays water onto the clinker, in an oxygen-free environment.

10. Apparatus according to any one of the preceding claims 4-9, wherein the second screw conveyor/mixer is connected, through a suitable pipe, to a dedusting filter and subsequently, through an exhauster, to a chimney.

11. Apparatus according to any one of the preceding claims 4-10, wherein the third metal conveyor, preferably a screw conveyor, connected to the output of the second screw conveyor/mixer, is connected to the plate cooler, adapted to cool the clinker by means of air blown through the perforated plates.
